# EUROPEAN PATENT SPECIFICATION

(11) **EP 2 199 498 B1**
(45) Date of publication and mention of the grant of the patent: **16.12.2020**
(21) Application number: 09180487.2
(22) Date of filing: 22.12.2009
(51) Int. Cl.: E04H 12/22, C08L 63/00

(54) **Method and epoxy mortar for repairing an attacked wood construction**
Verfahren und Epoxymörtelmasse zum Reparieren von beschädigte Holzstrukturen
Méthode et mortier époxide pour la réparation de structures en bois endommagées

(30) Priority: 22.12.2008 NL 2002363
(43) Date of publication of application: 23.06.2010
(73) Proprietor: Bisseling, Jacobus Petrus Johannes, 5421 EV Gemert (NL)
(72) Inventor: Bisseling, Jacobus Petrus Johannes, 5421 EV Gemert (NL)
(74) Representative: Verhees, Godefridus Josephus Maria

(56) References cited:
- EP-A1- 0 000 587
- JP-A- S6 150 905
- US-A- 2 636 354
- US-A- 3 321 211
- US-A- 4 702 057
- US-A- 4 921 555

## Description

### Field of the invention.

The invention relates to a method for restoring a degraded, partly submerged wood construction.

### State of the art

Degradation of wood constructions which are partly submerged, such as mooring posts and scaffolding and foundation poles, lock gates, fender pile groups and wooden foundations for embankments usually evolves just above the surface of the water. If the wood construction is weakened too much as a result of the degradation it should be replaced, which is a laborious undertaking.

### Summary of the invention.

It is an object of the invention to provide a method for restoring a degraded partly submerged wood construction. To this end the method according to the invention is characterised in that the degraded portion of the wood construction is removed and the resultant hollow in the wood construction is filled with epoxy grout comprising a mixture of in essence the same quantities of a first, a second and a third component, the first component being comprised of 30-50% bisphenol-A-epichlorhydrine, 10-15% pine oil, and 30-50% epoxide derivates, the second component being comprised of 20-40% m-phenylenebis, 20-40% 4-tert-butylphenol, 10-20% benzyl alcohol, 5-10% trimethylhexane-1,6-diamine, 2.5-5% 3-aminopropyldimethylamine, 2.5-5% 2,4,6-trisphenol and 1-2.5% 4,4'-isopropylidenediphenol, and the third component being in essence comprised of silicon dioxide. As a result the wood construction need not be replaced, so that many working hours and thus much money is saved. The epoxy grout is of such nature that it can be poured on wet wood, thus under water too and that this epoxy grout adheres to wet wood.

The invention likewise relates to a more general method for restoring a degraded wood construction. As regards this more general method the invention is characterised in that the degraded portion of the wood construction is removed and the hollow in the wood construction resulting from this degradation is filled with the epoxy grout mentioned above.

The epoxy grout can be applied by divers under water. An embodiment of the method according to the invention with which the person carrying out the repair can remain dry is characterised in that a container which is vertically divided and open at the top is fixed below the water level around the wood construction while in a watertight manner the components of the container are connected to each other and connected to the wood construction, after which the water is pumped out of the container and after which the degraded portion of the wood construction is removed and the resultant hollow in the wood construction is filled with an epoxy grout.

The invention also relates to the epoxy grout mentioned above for restoring a degraded wood construction, more particularly a partly submerged wood construction.

### Brief description of the drawings

The invention will be further described below in more detail with reference to an embodiment of the method according to the invention and represented in the drawing figures, in which:
Fig. 1 shows a plan view of a watertight container fixed around a mooring post during the execution of the method according to the invention; and
Fig. 2 shows a side view of the mooring post with the container fixed around it and shown in Fig. 1.

### Detailed description of the drawings

Degradation of wood constructions which are partly erected in water, such as mooring posts and scaffolding and foundation poles, lock gates, fender pile groups and wooden foundations for embankments usually evolves just above the surface of the water. Replacement of part of the wood construction with epoxy grout avoids replacing the whole mooring post. The attendant activities, however, are to be performed in a water-free environment. To this end a waterproof container is designed with which it is possible to work both below and just above the water level.

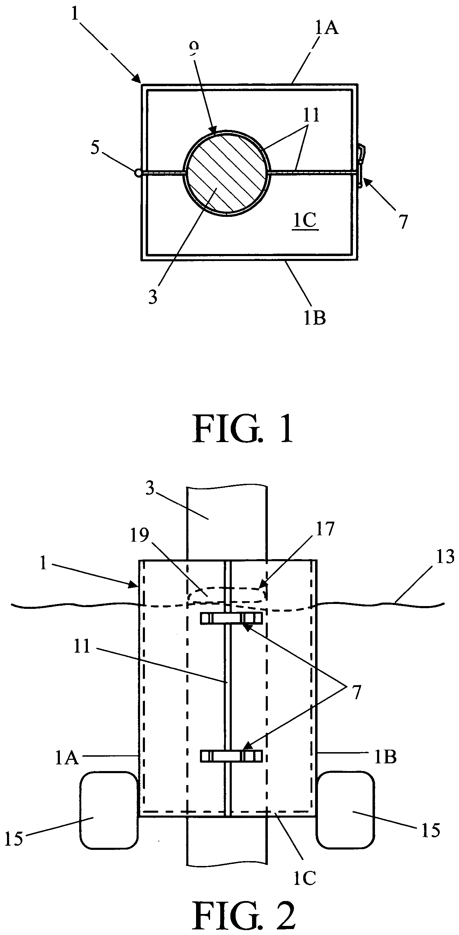

Figs. 1 and 2 show a waterproof container 1 of this type is fixed around a mooring post 3. Since the mooring post forms part of a construction the container cannot be slid down from the top over the mooring post. In consequence, the container 1 is arranged in portions. The two portions 1A and 1B are pivotably connected to each other on one side by means of a hinge 5. The two portions can be tightly clamped together on the opposite side by means of two clamping constructions 7. The bottom 1C of the container has a circular opening 9 through which the mooring post 3 extends once the container has been fixed around the mooring post. Sealing strips 11 which are fixed to the container portions are positioned between the two portions of the container and between the container and the mooring post.

For repairing the mooring post 3 the container 1 is put in the water and then clamped around the mooring post. The container 1 is fixed around the mooring post 3 with the bottom 1C of the container being positioned about one metre below the water level 13. Subsequently, the container is pumped dry. Weights 15 are suspended from the container 1 to avoid the container being pushed upwards as a result of the buoyancy of the water. In addition, it is furthermore possible to insert clamps between the bottom of the container and the wood construction to retain the container in the water (not shown).

As shown in Fig. 2 the mooring post 3 is degraded just above the water level 13. This degraded spot 17 first has to be removed. Subsequently, the hollow is filled with epoxy resin 19. The epoxy grout is a mixture of the same or substantially the same quantities of a first, a second and a third component. The first component is comprised of 30-50% bisphenol-A-epichlorhydrine, 10-15% pine oil, and 30-50% epoxide derivates. The second component is comprised of 20-40% m-phenylenebis, 20-40% 4-tert-butylphenol, 10-20% benzyl alcohol, 5-10% trimethylhexane-1,6-diamine, 2.5-5% 3-minopropyldimethylamine, 2.5-5% 2,4,6-trisphenol and 1-2.5% 4,4'-isopropylidenediphenol. Finally, the third component is comprised of silicon dioxide. Additional strengthening and bonding may be found in the use of glass fibre reinforcement.

Albeit the invention has been described in the foregoing based on the drawing figures, it should be observed that the invention is not by any manner or means restricted to the embodiment shown in the drawing figures.

## Claims

1. A method for restoring a degraded, partly submerged wood construction, **characterised in that** the degraded portion of the wood construction is removed and the resultant hollow in the wood construction is filled with epoxy grout comprising a mixture of in essence the same quantities of a first, a second and a third component, the first component being comprised of 30-50% bisphenol-A-epichlorhydrine, 10-15% pine oil, and 30-50% epoxide derivates, the second component being comprised of 20-40% m-phenylenebis, 20-40% 4-tert-butylphenol, 10-20% benzyl alcohol, 5-10% trimethylhexane-1,6-diamine, 2.5-5% 3-aminopropyldimethylamine, 2.5-5% 2,4,6-trisphenol and 1-2.5% 4,4'-isopropylidenediphenol, and the third component being in essence comprised of silicon dioxide.

2. A method for restoring a degraded wood construction, **characterised in that** the degraded portion of the wood construction is removed and the resultant hollow in the wood construction is filled with epoxy grout comprising a mixture of in essence the same quantities of a first, a second and a third component, the first component being comprised of 30-50% bisphenol-A-epichlorhydrine, 10-15% pine oil, and 30-50% epoxide derivates, the second component being comprised of 20-40% m-phenylenebis, 20-40% 4-tert-butylphenol, 10-20% benzyl alcohol, 5-10% trimethylhexane-1,6-diamine, 2.5-5% 3-aminopropyldimethylamine, 2.5-5% 2,4,6-trisphenol and 1-2.5% 4,4'-isopropylidenediphenol, and the third component being in essence comprised of silicon dioxide.

3. A method as claimed in claim 1 or 2, **characterised in that** a container which is vertically divided and open at the top is fixed below the water level around the wood construction while in a watertight manner the components of the container are connected to each other and connected to the wood construction, after which the water is pumped out of the container and after which the degraded portion of the wood construction is removed and the resultant hollow in the wood construction is filled with said epoxy grout.

4. A method as claimed in claim 1 or 2, **characterised in that** the degraded portion of the wood construction is removed and the hollow in the wood construction resulting from this degradation is filled with said epoxy grout, which epoxy grout is poured on wet wood under water.

5. An epoxy grout for use in a method as claimed in any one of the preceding claims, **characterised in that** the epoxy grout is a mixture of in essence the same quantities of a first, a second and a third component, the first component being comprised of 30-50% bisphenol-A-epichlorhydrine, 10-15% pine oil, and 30-50% epoxide derivates, the second component being comprised of 20-40% m-phenylenebis, 20-40% 4-tert-butylphenol, 10-20% benzyl alcohol, 5-10% trimethylhexane-1,6-diamine, 2.5-5% 3-aminopropyldimethylamine, 2.5-5% 2,4,6-trisphenol and 1-2.5% 4,4'-isopropylidenediphenol, and the third component being in essence comprised of silicon dioxide.

## Patentansprüche

1. Verfahren zur Wiederherstellung einer abgebauten, teilweise eingetauchten Holzkonstruktion, das **dadurch gekennzeichnet ist, dass** der abgebaute Teil der Holzkonstruktion entfernt wird und der resultierende Hohlraum in der Holzkonstruktion mit Epoxidmörtel gefüllt wird, der eine Mischung von im wesentlichen den gleichen Mengen von eine erste, eine zweite und eine dritte Komponente umfasst, wobei die erste Komponente zusammengesetzt ist aus 30-50% Bisphenol-A-epichlorhydrin, 10-15% Kiefernöl und 30-50% Epoxidderivaten, wobei die zweite Komponente zusammengesetzt ist aus aus 20-40% m-Phenylenbis, 20-40% 4-tert-Butylphenol, 10-20% Benzylalkohol, 5-10% Trimethylhexan-1,6-diamin, 2,5-5% 3-Aminopropyldimethylamin, 2,5-5% 2,4,6 -trisphenol und 1-2,5% 4,4'-Isopropylidendiphenol, und wobei die dritte Komponente im wesentlichen aus Siliciumdioxid besteht.

2. Verfahren zur Wiederherstellung einer abgebauten Holzkonstruktion, das **dadurch gekennzeichnet ist, dass** der abgebaute Teil der Holzkonstruktion entfernt wird und der resultierende Hohlraum in der Holzkonstruktion mit Epoxidmörtel gefüllt wird, der eine Mischung von im wesentlichen den gleichen Mengen eine erste, eine zweite und eine dritte Komponente umfasst, wobei die erste Komponente zusammengesetzt ist aus 30-50% Bisphenol-A-epichlorhydrin, 10-15% Kiefernöl und 30-50% Epoxidderivaten, wobei die zweite Komponente zusammengesetzt ist aus 20-40% m-Phenylenbis besteht 20-40% 4-tert-Butylphenol, 10-20% Benzylalkohol, 5-10% Trimethylhexan-1,6-diamin, 2,5-5% 3-Aminopropyldimethylamin, 2,5-5% 2,4,6-Trisphenol, und 1-2,5% 4,4'-Isopropylidendiphenol, und wobei die dritte Komponente im wesentlichen aus Siliciumdioxid besteht.

3. Verfahren nach Anspruch 1 oder 2, **dadurch gekennzeichnet, dass** ein Behälter, der vertikal geteilt und oben offen ist, unterhalb des Wasserspiegels um die Holzkonstruktion herum befestigt wird, während die Komponenten des Behälters wasserdicht miteinander verbunden werden und mit der Holzkonstruktion verbunden werden, wonach das Wasser aus dem Behälter gepumpt wird und wonach der abgebaute Teil der Holzkonstruktion entfernt wird und der resultierende Hohlraum in der Holzkonstruktion mit dem Epoxidmörtel gefüllt wird.

4. Verfahren nach Anspruch 1 oder 2, **dadurch gekennzeichnet, dass** der abgebaute Teil der Holzkonstruktion entfernt wird und die aus dieser Verschlechterung resultierende Vertiefung in der Holzkonstruktion mit dem Epoxidmörtel gefüllt wird, wobei der Epoxidmörtel auf feuchtes Holz unter Wasser gegossen wird.

5. Epoxidmörtel zur Verwendung in einem Verfahren nach einem der vorhergehenden Ansprüche, **gekennzeichnet dadurch, dass** der Epoxidmörtel eine Mischung aus im wesentlichen den gleichen Mengen einer ersten, einer zweiten und einer dritten Komponente ist, wobei die erste Komponente zusammengesetzt ist aus 30-50% Bisphenol-A-epichlorhydrin, 10-15% Kiefernöl und 30-50% Epoxidderivaten, wobei die zweite Komponente zusammengesetzt ist aus 20-40% m-Phenylenbis, 20-40% 4-tert-Butylphenol besteht 10-20% Benzylalkohol, 5-10% Trimethylhexan-1,6-diamin, 2,5-5% 3-Aminopropyldimethylamin, 2,5-5% 2,4,6-Trisphenol und 1-2,5% 4,4'-Isopropylidendiphenol, und wobei die dritte Komponente im wesentlichen besteht aus Siliziumdioxid.

## Revendications

1. Procédé de restauration d'une construction en bois dégradé, partiellement submergé, **caractérisé en ce que** la partie dégradée de la construction en bois est enlevée et le creux résultant dans la construction en bois est rempli de coulis époxy comprenant un mélange essentiellement des mêmes quantités d'un un premier, un deuxième et un troisième composant, le premier composant étant composé de 30 à 50% de bisphénol-A-épichlorhydrine, de 10 à 15% d'huile de pin et de 30 à 50% de dérivés d'époxyde, le deuxième composant étant composé de 20 à 40% m-phénylènebis, 20-40% 4-tert-butylphénol, 10-20% alcool benzylique, 5-10% triméthylhexane-1,6-diamine, 2,5-5% 3-aminopropyldiméthylamine, 2,5-5% 2,4,6 -trisphénol et 1 à 2,5% de 4,4'-isopropylidènediphénol, et le troisième composant étant essentiellement composé de dioxyde de silicium.

2. Procédé de restauration d'une construction en bois dégradé, **caractérisé en ce que** la partie dégradée de la construction en bois est enlevée et le creux résultant dans la construction en bois est rempli de coulis époxy comprenant un mélange essentiellement des mêmes quantités d'un premier, un deuxième et troisième composants, le premier composant étant composé de 30 à 50% de bisphénol-A-épichlorhydrine, de 10 à 15% d'huile de pin et de 30 à 50% de dérivés d'époxyde, le deuxième composant étant constitué de 20 à 40% de m-phénylènebis, 20-40% 4-tert-butylphénol, 10-20% alcool benzylique, 5-10% triméthylhexanc-1,6-diamine, 2,5-5% 3-aminopropyldiméthylamine, 2,5-5% 2,4,6-trisphénol, et 1 à 2,5% de 4,4'-isopropylidènediphénol, et le troisième composant étant essentiellement composé de dioxyde de silicium.

3. Procédé selon la revendication 1 ou 2, **caractérisé en ce qu'**un conteneur qui est divisé verticalement et ouvert en haut est fixé sous le niveau de l'eau autour de la construction en bois tandis que de manière étanche les composants du conteneur sont reliés à chacun. autre et connecté à la construction en bois, après quoi l'eau est pompée hors du récipient et après quoi la partie dégradée de la construction en bois est enlevée et le creux résultant dans la construction en bois est rempli avec ledit coulis époxy.

4. Procédé selon la revendication 1 ou 2, **caractérisé en ce que** la partie dégradée de la construction en bois est enlevée et le creux de la construction en bois résultant de cette dégradation est rempli avec ledit coulis époxy, lequel coulis époxy est coulé sur du bois humide sous-marin.

5. Coulis époxy à utiliser dans un procédé selon l'une quelconque des revendications précédentes, **caractérisé en ce que** le coulis époxy est un mélange essentiellement des mêmes quantités d'un premier, d'un deuxième et d'un troisième composant, le premier composant étant composé de 30 à 50% de bisphénol-A-épichlorhydrine, de 10 à 15% d'huile de pin et de 30 à 50% de dérivés d'époxyde, le deuxième composant étant composé de 20 à 40% de m-phénylènebis, 20 à 40% de 4-tert-butylphénol, 10-20% d'alcool benzylique, 5-10% de triméthylhexanc-1,6-diamine, 2,5-5% 3-aminopropyldiméthylamine, 2,5-5% 2,4,6-trisphénol et 1-2,5% 4,4'-l'isopropylidènediphénol, et le troisième composant étant essentiellement composé de dioxyde de silicium.
